# EUROPEAN PATENT SPECIFICATION

(11) **EP 0 295 633 B1**
(45) Date of publication and mention of the grant of the patent: **03.03.1993**
(21) Application number: 88109485.8
(22) Date of filing: 14.06.1988
(51) Int. Cl.: G02B 6/44, G02B 6/04

(54) **Optical fiber ribbon end-structure**
Endstück faseroptischen Bandkabels
Structure de terminaison de rubans de fibres optiques

(30) Priority: 19.06.1987 JP 93352/87 U
(43) Date of publication of application: 21.12.1988
(73) Proprietor: MITSUBISHI RAYON CO., LTD., Tokyo 104 (JP)
(72) Inventor: Fujigaki, Takashi, Kamakura-shi Kanagawa (JP); Fujinaga, Yoshikazu, Toyohashi-shi Aichi (JP); Tokuda, Shuichiro, Chikusa-ku Nagoya-shi Aichi (JP); Furukawa, Noriyuki, Chikusa-ku Nagoya-shi Aichi (JP); Ichimura, Kiyoshi, Setagaya-ku Tokyo (JP); Shibuya, Yukio, Setagaya-ku Tokyo (JP); Iuchi, Shigeru, Setagaya-ku Tokyo (JP)
(74) Representative: Grams, Klaus Dieter, Dipl.-Ing.

(56) References cited:
- EP-A- 0 236 800
- DE-A- 3 526 823
- US-A- 3 294 504
- US-A- 4 188 088

## Description

### BACKGROUND OF THE INVENTION

### Field of the Invention

This invention relates to an improved end structure of a single or bundle of optical fiber ribbons for use in light transmission in optical communications, using a display unit or sensing means.

### Description of the Prior Art

In the document US-A-4 022 647, a tape-like optical fiber element formed into a coherent fiber bundle is disclosed. This bundle consists of a wrapped sheet provided with a veneer of optic fibers. The bundle is a spiral bundle formed by wrapping said sheet about an axis parallel to an axis, commencing at one edge of the sheet.

Furthermore, a similar optical fiber element is disclosed in document JP-A-52 26839, which also consists of a spirally wrapped sheet. This sheet has a plane back cloth with a plastic foil being attached to said back cloth in a wave form whereby, several cavities in which optical fibers can be placed are formed between the back cloth and the plastic foil.

In the prior art, an end of bundle of optical fibers, is fixed in a connector terminal with adhesive or, instead of adhesive, by tight pressing thereby permiting frequent attachment and detachment of the terminal to light emitting or receiving element to be easily accomplished.

Conventional optical fiber ribbons consist of small diameter optical fibers arranged in the form of tape and having a coating layer holding them together. Until now no satisfactory connector terminal for the end of an optical fibre ribbon has been proposed.

In particular there was no connector that permits semipermanent fastening of the optical fiber end to a light emitting or receiving element that did not have high manufacturing costs. Furthermore the adhesive used could cause optical deterioration with time.

### SUMMARY OF THE INVENTION

The above problems or defects have been overcome by the inventor. The present invention is defined in claim 1.

### BRIEF DESCRIPTION OF THE DRAWINGS

Figs. 1a and 1b are perspective views of end structures of optical fiber ribbon bundle embodying the invention;
Figs. 2a and 2b are cross-sectional views of the end structures of Figs. 1a and 1b, drawn to enlarged scale; and
Fig. 3 is a stepwise diagram illustrating the outline of process for forming an end structure of optical fiber ribbon bundle according to the invention.

### DETAILED DESCRIPTION OF THE INVENTION

The invention will be described more fully by way of examples with reference to the accompanying drawings hereinafter:

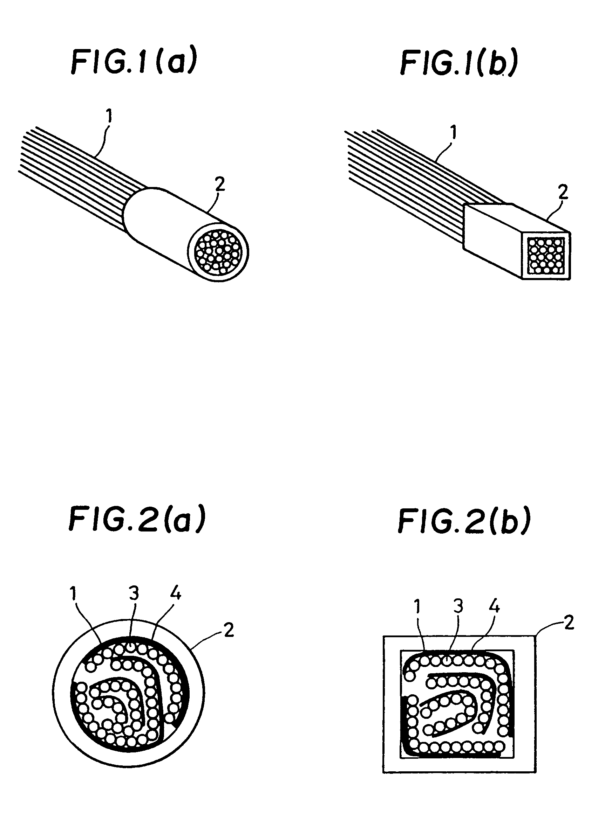

Figs. 1a and 1b give perspective views of end structures of optical fiber ribbon bundles according to the invention and Figs. 2a and 2b are cross-sectional views of them, drawn to enlarged scale, in which reference characters designate 1 an optical fiber ribbon, 3 optical fibers as of plastic, 2 a metallic sleeve fitted over the end of a bundle of optical fiber ribbons 3, and 4 a coating layer of synthetic resin, on the inner surface of the sleeve 2.

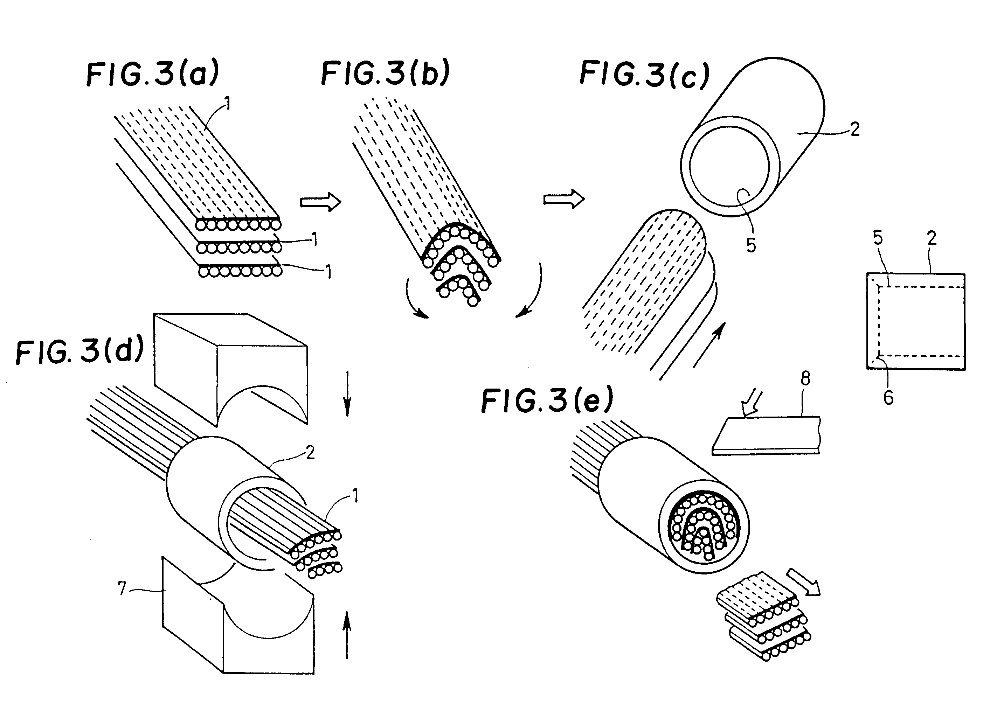

In the following, the process for forming an optical fiber ribbon terminal embodying the invention will be described referring the stepwise the process shown in Fig. 3.

A plurality of optical fiber ribbons 1 are bundled together, with the coating layer at top, as shown in Fig 3a. The end of the optical fiber ribbon bundle is transversely bent or folded with the coating layer of each ribbon on the outside, as shown in Fig. 3b, and thereafter inserted into a metallic sleeve 2 with coating layers 4 adjacent the inner surface 5 of the sleeve 2, as shown in Fig. 3c. To aid insertion, the sleeve 2 may have a tapered opening 6 into which the end of optical fiber ribbon bundle is inserted. Then the sleeve 2 is pressed in a press 7, as shown in Fig. 3d, so that the totallized section of the optical fiber ribbon(s) after pressing is the same as or somewhat smaller than the resulting inside section of the sleeve. thus The end of optical fiber ribbon bundle thereby has a tight fit in the sleeve. The sleeve may be pressed into any intended shape. Subsequently passing an end part of the optical fiber ribbon bundle extending through the pressed sleeve is cut off with a cold or heated cutter 8, as shown in Fig. 3e.

This process can be accomplished without doing damage optical fibers because there are coating layers 4 are positioned between the inner surface 5 of the sleeve 2 and optical fibers 3, and thus their optical characteristic can be maintained.

## Claims

1. An optical fiber terminal comprising
- at least one optical fiber ribbon (1) tightly fitted in a metallic sleeve member (2) with the constituent fibers (3) extending therethrough
- each ribbon (1) comprising a single synthetic resin coating layer (4) supporting a row of fibers (3), wherein the end(s) of said optical fiber ribbon(s) (1) is (are) folded, curved or wrapped together and configured so that
- said coating layer(s) (4) of said optical fiber ribbon(s) (1) is(are) mostly on the outside of the bundled ribbon(s) (1) thereby forming a layer protecting the fibers (3) from damage and effectively coming between the bulk of the fibers (3) and the inner surface (5) of said tightly fitting metallic sleeve member (2).

## Patentansprüche

1. Lichtwellenleiteranschluß mit
- mindestens einem Lichtwellenleiter-Bandkabel (1), das fest in ein metallisches Umkleidungselement (2) mit sich durch dieses hindurch erstreckenden Fasern (3), aus denen das Kabel besteht, eingepasst ist, wobei
- jedes Bandkabel (1), das eine einzige Mantelschicht (4) aus Kunstharz als Träger für eine Reihe von Fasern (3) aufweist, wobei das (die) Ende(n) der (des) Lichtwellenleiter-Bandkabel(s) (1) gefaltet, gebogen oder zusammengerollt und so angeordnet ist (sind), daß
- die Mantelschicht(en) (4) der (des) Lichtwellenleiter-Bandkabel(s) (1) überwiegend an der Außenseite der (des) gebündelten Bandkabel(s) (1) ist (sind) und so eine Schicht bildet (bilden), die die Fasern (3) vor Schaden bewahrt und die wirkungsvoll zwischen den Großteil der Fasern (3) und der inneren Oberfläche (5) des fest sitzenden metallischen Umkleidungselements (2) tritt.

## Revendications

1. Extrémité pour fibres optiques comprenant :
au moins un ruban de fibres optiques (1) monté serré dans un élément manchon métallique (2), les fibres constituantes (3) le traversant ;
chaque ruban (1) comprenant une couche individuelle de revêtement en résine synthétique (4) supportant une rangée de fibres (3), dans lequel les extrémités ou l'extrémité (les extrémités) dudit (desdits) ruban(s) de fibres optiques (1) est (sont) pliée(s), incurvée(s) ou enroulée(s) ensemble et conformée(s) de sorte que :
ladite (lesdites) couche(s) de revêtement (4), dudit (desdits) ruban(s) de fibres optiques (1) est (sont) en grande partie du côté extérieur du(des) ruban(s) (1) mis en faisceau, en formant par ce moyen une couche protégeant les fibres (3) de tout dommage et venant effectivement entre le gros des fibres (3) et la surface intérieure (5) dudit élément manchon métallique monté serré (2).
